# EUROPEAN PATENT SPECIFICATION

(11) **EP 0 567 602 B1**
(45) Date of publication and mention of the grant of the patent: **04.03.1998**
(21) Application number: 92912881.7
(22) Date of filing: 29.05.1992
(51) Int. Cl.: F23G 5/12, A62D 3/00, B09B 3/00

(54) **METHOD AND APPARATUS FOR DECONTAMINATION OF SOILS**
VERFAHREN UND VORRICHTUNG FÜR DIE ENTGIFTUNG VON ERDBODEN
PROCEDE ET APPAREIL DE DECONTAMINATION DE SOLS

(30) Priority: 30.05.1991 US 707484
(43) Date of publication of application: 03.11.1993
(73) Proprietor: LATER, Roger Carson, Santa Monica, CA 90404 (US)
(72) Inventor: LATER, Roger Carson, Santa Monica, CA 90404 (US)
(74) Representative: Marlow, Nicholas Simon
(86) International application number: US9204471
(87) International publication number: WO9221917

(56) References cited:
- EP-A- 0 360 941
- WO-A-89/08079
- WO-A-91/09823
- US-A- 4 977 839
- N.T.I.S. TECH. NOTES vol. 11, no. D, 1985, SPINGFIELD VIRGINIA USA page 1214 'uv-ozonation or paraquat'

## Description

### Background of the Invention

The invention relates to methods and apparatus for decontaminating solid materials, in particular solid materials in particulate form.

There is an ever-increasing need for efficient and effective methods and apparatus to remove contaminants from soil, sand and other solid materials. In particular, toxic organic substances such as petroleum hydrocarbons and various derivatives thereof have been relatively intractable using known methods for treatment of solid materials.

The utility of ozone or hydrogen peroxide as oxidizing agents for use in the treatment of aqueous waste solutions and other contaminated waters, to remove certain types of organic pollutants, is known. For example, U.S. Patent 4,395,337 to Ciepela describes treatment of brackish water, wherein residual oil is stripped by treatment with ozone. U.S. Patent 4 230 571 to Dadd and U.S. Patent 4 504 445 to Walz describe treatment of water, wherein ozone is generated by ultraviolet radiation; in addition, Dadd notes that the ultraviolet radiation may act as a catalyst for disinfecting and oxidizing action by the ozone. U.S. Patent 4 416 786 to Knorre et al and U.S. Patent 4 591 443 to Brown et al similarly describe the use of hydrogen peroxide in the treatment of waste water.

The reactions of ozone or hydrogen peroxide with waste water are quite complex and to date are not completely understood. It is generally recognised, however, that the hydroxyl radical is an important intermediate. The hydroxyl radical functions both in the direct oxidation of organic contaminants and in the generation of additional radicals for participation in further reactions. It is known that hydroxyl radicals are formed by exposure of ozone or hydrogen peroxide to ultraviolet light (<400 nm).

U.S. Patent 4 792 407 to Zeff et al describes a method of oxidizing organic contaminants in aqueous solutions which comprises using, in combination, ozone, hydrogen peroxide and ultraviolet radiation. Zeff, et al, discloses exposing contaminants to ozone either subsequently to or simultaneously with exposure to UV and hydrogen peroxide. Addition of hydrogen peroxide to the UV/ozone combination in such aqueous systems is reported to result in an increased efficiency of oxidation.

US 4 977 839 discloses a method of treating solid waste including organic material in which the contaminants are evaporated.

In accordance with the present invention there is provided a method for treating solid, particulate material including contaminants comprising organic substances, characterised by placing contaminated material in a first treatment hopper, evaporating at least a portion of the contaminants, contacting the evaporated contaminants with a first gas phase comprising hydroxyl radicals, in an amount and for a time sufficient to initiate oxidation of the contaminants, transferring the thus partially treated contaminants to a second treatment hopper, further contacting evaporated contaminants with a second gas phase comprising hydroxyl radicals, in an amount and for a time sufficient to maintain the oxidation, and cycling the resulting solid particulate material including contaminants between the first and second treatment hoppers, each time treating with gas phase hydroxyl radicals in an amount effective to maintain the oxidation of evaporated contaminants, until a substantial quantity of the organic contaminants have been removed.

The hydroxyl radicals are created by hydrogen peroxide or ozone, preferably a combination of hydrogen peroxide, ozone and UV light. In a preferred embodiment, the rate of hydroxyl formation, in the gas phase, is controlled through the staged introduction of ozone and hydrogen peroxide to achieve controlled oxidation of the contaminant materials.

Further, in accordance with the invention, there is provided a method according to any preceding claim wherein the organic contaminant is a pesticide. In a preferred embodiment of the apparatus in accordance with the invention the decontamination unit is a totally enclosed closed-loop system.

The invention will be further described by way of example with reference to the drawings, in which:

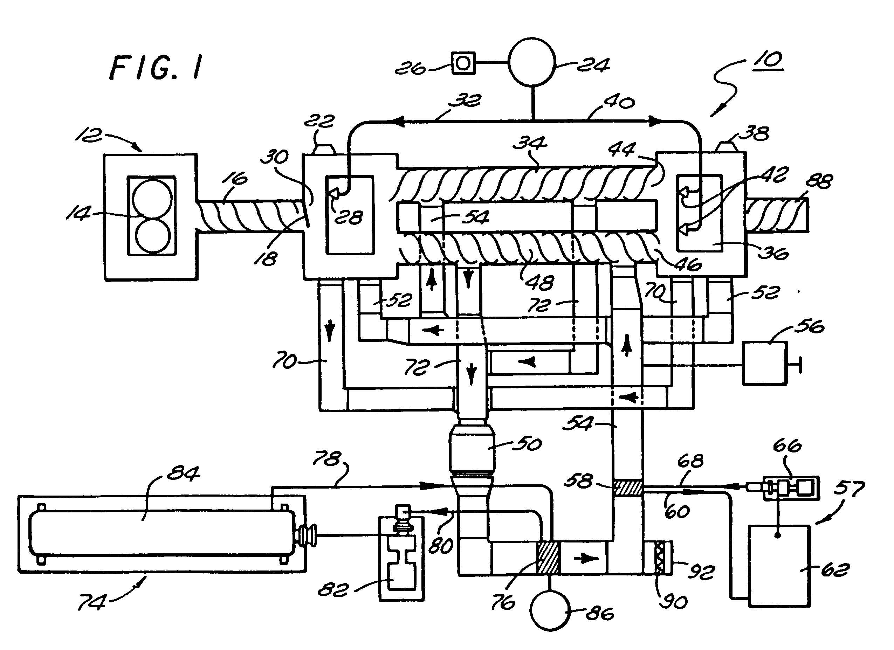

Fig. 1 is a schematic view of a decontamination unit in accordance with the invention.

In accordance with the present invention, it has been determined that treatment of solid materials containing contaminants, including organic contaminants, with gas phase hydroxyl radicals permits the rapid and economical elimination of a wide variety of contaminants. For example, in accordance with the present invention, light-end hydrocarbons contaminants are readily removed from soil or other solid materials. The methods and apparatus in accordance with the invention are particularly useful in removing hydrocarbon contaminants containing from one to eighteen carbon atoms, such as unleaded gasoline, kerosine, Jet A and Jet B fuels. In addition, the present invention is useful in removing hydrocarbon derivatives, including partially oxidized organic materials, such as alcohols and ketones; halogenated hydrocarbons; and a variety of pesticides, including those containing chlorine and phosphorous.

The hydroxy radicals are created by hydrogen peroxide or ozone, preferably by a combination of hydrogen peroxide, ozone and UV light. While not being bound to any particular theory of operation, it is believed that this combined treatment leads to the optimum generation of gas phase, hydroxyl radicals, which in turn react with the contaminants. For example, it appears that the hydroxyl radicals react with hydrocarbon contaminants, so as to break down the hydrocarbon chain. Surprisingly, the gas phase generation of hydroxyl radicals is apparently not dependent upon the same reactions as produce hydroxyl radicals in an aqueous-phase.

The methods and apparatus in accordance with the present invention take advantage of the high reactivity of the hydroxyl radicals formed in gas phase mixtures of hydrogen peroxide, ozone and UV light, compared to the reactivity of hydroxyl radicals formed in aqueous solutions. The reactivity of hydroxyl radicals in aqueous solutions is diminished, because of the recombination of hydroxyl radicals in aqueous solvent cages to reform hydrogen peroxide, as well as the decomposition of hydroxyl radicals, in the aqueous phase, by collision with nonpollutant species such as CO₃⁻². In the gas phase many of these effects are eliminated by keeping the water content at a minimum. In so doing, the hydroxyl radicals are made surprisingly effective in their reactions with contaminants.

The advantages include:
A) The large reaction rate constants for gas phase hydroxyl radicals. The reaction rate constants for hydroxy radicals in the gas phase are on the order of 10¹⁰ - 10¹¹, while the reaction rate constants in water are only on the order of 10⁷-10⁹ and the reaction rate constants of ozone in water, are only on the order of 10¹. It can be seen that the gas phase hydroxyl radical is much more reactive. The increased reactivity makes the decontamination process of the instant invention more efficient and complete and thorough than corresponding aqueous decontamination processes.
B) The strong reactivity of compounds that are resistant to aqueous phase treatment by hydrogen peroxide, ozone and UV light. In particular, hydrocarbon fuels, chlorinated pesticides and to a lesser extent aromatic compounds have a much greater reactivity with hydroxyl radicals, in the gas phase, than with hydrogen peroxide, peroxy or ozone or combinations of ozone, hydrogen peroxide and UV light in aqueous phase.

Contaminated soil or other solid material is loaded directly into a totally enclosed closed-loop decontamination unit 10, via an entry hopper 12. To facilitate treatment, the entry hopper 12 contains a means for comminuting the solid material 14, for example by shredding the solid material to a sandy particle size. The particle size is typically from about 1 mm³ to about 64 cm³, preferably from about 1 mm³ to about 27 cm³, more preferably about 1.25 cm³.

Of course, no comminuting is necessary when the material to be treated has an appropriate particle size, as is the case, for example, when activated charcoal is regenerated. In such cases, comminuting can be omitted without serious impact of the efficacy of the invention.

The material to be treated is then transferred by a first transfer means. The transfer means is a covered, first soil auger 16, such as one manufactured by Screw Conveyor Company, Visalia, California. A means for preventing backflow 18 is located at or near the entry port 30 to the first soil auger. It seals the entry hopper 12, from the rest of the decontamination unit 10, once the treatment process begins.

The material is transferred by the soil auger 16 into a first treatment hopper 20, containing a first UV light port 22. The UV light port 22 permits UV light (i.e., light with a wavelength of less than 400 nm), from a UV light source, such as the sun, (not shown) to enter the first treatment hopper 20.

Hydrogen peroxide is applied to the contaminated material in the first treatment hopper 20. UV light is preferably employed as a catalyst. Further, the treatment with hydrogen peroxide is preferably carried out in conjunction with the application of ozone. Contamination levels are site-specific. Accordingly, the amount, concentration and combination of hydrogen peroxide, ozone and UV light will vary in accordance with the nature and relative concentrations of contaminants at a given treatment site. The amount, concentration and combination to be used, in a particular instance, will be readily determinable by one skilled in the art, without undue experimentation.

The hydrogen peroxide is stored in storage tank 24. The pressure of the hydrogen peroxide is controlled by an air pump 26 operationally connected to the storage tank 24.

The hydrogen peroxide is applied to the contaminated material by conventional techniques, such as by spray nozzle 28 located above the entry port 30 into the first hopper 20. The hydrogen peroxide is fed from the storage tank 24 to the nozzle 28 through a first hydrogen peroxide supply line 32.

The hydrogen peroxide produces gas phase hydroxyl radicals which causes the oxidative breakdown of the contaminants -- an exothermic reaction. Any suitable amount of hydrogen peroxide can be applied to the contaminated material. The amount to be employed at a particular site depends on such factors as the types and concentrations of contaminants and the type of material being treated.

The amount added should be sufficient to initiate a controlled oxidation reaction. Enough should be added that oxidation, as evidenced by a rise in temperature in the first treatment hopper 20, occurs. If too much is initially added, the oxidation can become too vigorous and the temperature can rise to undesirably high levels. Generally, the temperature in the first treatment hopper 20 ranges from about 100 °C to about 200 °C, preferably about 110 °C to about 150 °C.

The ratio of contaminated soil to hydrogen peroxide to be employed to treat a particular soil will be readily determinable by one skilled in the art without undue experimentation. Typically a weight ratio of contaminated soil to hydrogen peroxide of from about 8.0:1 to about 1:1, preferably from about 5.0:1 to about 2.2:1, is effective. The hydrogen peroxide is suitably applied in a wide range of concentrations. Concentrations of from about 35% to about 100% are employed. While it is desirable to keep the water concentration to a minimum, because of the difficulty of handling 100% hydrogen peroxide, concentrations of about 50% are preferred.

After application of the hydrogen peroxide, the material is kept in the first treatment hopper 20 until a controlled oxidation is established. The residence time in the first treatment hopper 20, for a particular treatment, will depend upon the material to be treated and the contaminants to be removed. Typical residence times range from about 10 seconds to about 10 minutes, preferably from about 15 seconds to about 5 minutes, more preferably about 15 seconds.

After the initial treatment, the material is transferred by a second covered soil auger 34 to a second treatment hopper 36, which is fitted with a second UV light port 38. If the material still contains some contamination, it is again treated with hydrogen peroxide, preferably in combination with UV light and ozone.

The hydrogen peroxide is fed to the second treatment hopper 36 from the storage tank 24 through a second hydrogen peroxide supply line 40 to spray nozzles 42, located at the second hopper entry port 44 and the second hopper return port 46, respectively. Sufficient hydrogen peroxide is added to initiate or maintain the controlled oxidation of the remaining contaminants. The temperatures in the second treatment hopper 36 ranges from about 100 °C to about 200 °C, preferably about 110 °C to about 150 °C.

The residence time in the second treatment hopper 36 will depend upon the material to be treated and the contaminant to be removed. Typical residence times are from about 10 seconds to about 10 minutes, preferably from about 15 seconds to about 5 minutes, more preferably about 15 seconds. If the material still contains some contamination, the material is returned to the first treatment hopper 20, by a third covered soil auger 48 and the treatment is repeated, until no contaminants remain.

Particle movement via the soil augers 34 and 48 stirs the solid material to achieve even application of the hydrogen peroxide. The stirring further serves to dilute concentrations of contaminants, and to maximize the contact between the particles and the hydrogen peroxide.

The speed at which the augers 34 and 48 move the solid material is adjustable, thereby allowing soil residency time in the treatment hoppers, 20 and 36, to be adjusted. The slower the augers are turned, the longer the residency time. Typical auger speeds are from about 0.4 m³/hr (0.5 yd³/hr) to about 19 m³/hr (25 yd³/hr), preferably from about 7.6 m³/hr (10 yd³/hr) to about 15 m³/hr (20 yd³/hr) more preferably about 14 m³/hr (18 yd³/hr).

Auger speed variability can be achieved through a variety of means. A representative means is a frequency invertor power controller (not shown) sold by Loyola Industries under the trade name DPAC-1-S.

Air is circulated through the treatment hoppers, 20 and 36, and the soil augers, 34 and 48, by supply fan 50. Air supply ducts 52 provide clean, ozone-rich air to the treatment hoppers, 20 and 36, while air supply ducts 54 provide clean, ozone-rich air to the augers, 34 and 48.

Ozone, produced by an ozone generator 56, is initially introduced into the decontamination unit 10 through air supply duct 54. Any suitable concentration of ozone can be employed. The amount will vary in accordance with the nature and relative concentration of contaminants at a given treatment site. The amount will be readily determinate by one skilled in the art, without undue experimentation. In general, ozone is employed in concentrations up to about 3%, preferably from about 1% to about 2%, based on the composition of the gas phase. The ozone concentration is monitored by an ozone sensor (not shown) located at the intake of the supply fan 50.

The ozone can be generated by a variety of systems. A preferred system is manufactured by PCI Ozone and Control Systems, Inc., West Caldwell, New Jersey. This system generates ozone by a corona discharge method. Alternative systems can be employed, as the source of the ozone is not critical. Indeed, the use of ultraviolet radiation within the closed reaction chamber will itself generate a certain amount of ozone.

The air within the decontamination unit 10, is heated by a hot water assembly 57. A hot water coil 58 is located in air supply duct 54. After passing through the coil 58, water travels through a hot water return pipe 60, to a hot water boiler 62, through a hot water circulating pump 66, and then back to hot water coil 58 through a hot water supply pipe 68. A useful boiler assembly is manufactured by Teledyne Laars, North Hollywood, California. During some treatments, however, the controlled oxidation is sufficiently exothermic, that no additional heat needs to be added to the decontamination unit.

The augers 34 and 48 are heated to a temperature sufficient to evaporate contaminants, hydrogen peroxide and treatment by-products trapped in or absorbed by the solid material. The temperature in augers 34 and 48 is generally from about 5 °C to about 110 °C, preferably from about 25 °C to about 110 °C, more preferably about 100 °C. The movement of the augers, 34 and 48, enhances the rate at which contaminants, hydrogen peroxide and treatment by-products evaporate from the solid material.

Evaporation of the contaminants and hydrogen peroxide is critical to the decontamination process, because it facilitates contact between the contaminants and gas phase hydroxy radicals. Evaporation also keeps the treatment by-products, generally a mixture of carbon dioxide and water (when the contaminants are organic contaminants) in the vapor state, so that the water can be subsequently removed by condensation.

Post-treatment air, containing contaminants and treatment by-products, is removed from the treatment hoppers, 20 and 36, through air return ducts 70 and from augers, 34 and 48, through air return ducts 72.

The return air lines, 70 and 72, pass the post-treatment air through a chilled water system 74. The chilled water system 74, contains a chilled water coil 76 which removes water and reaction by-products from the air by condensation. The chilled water coil 76 is cooled by water from a chilled water supply pipe 78. The chilled water is recirculated through a chilled water return 80 pipe, which returns the water through chilled water pump 82, into water chiller 84 and then back to the chilled water supply line 78. Representative of the cooling systems which can be employed in accordance with the invention is the water cooling system manufactured by Marley Company, San Gabriel, California.

The condensate is collected in a suitable condensation tank 86 for disposal or recovery thereof. It is important that the condensate be removed from the system, to prevent the water from reacting with the hydroxyl radicals, thereby impeding the decontamination reactions. The condensation tank 86 contains an activated charcoal water condensate filter (not shown) to trap any contaminants that may be condensed and collected with the water by-product.

The material is cycled between the first and second treatment hoppers, 20 and 36, until the contaminants have been removed. In those embodiments where the contaminants are hydrocarbon contaminants, a hydrocarbon sensor (not shown) located in the first treatment hopper 20 monitors the level of unreacted hydrocarbons remaining in the air (and, therefore, in the soil as well). A thermometer (not shown) located in one of the return air ducts 72 associated with the soil augers, 34 and 48, measures the heat generated by oxidation of the contaminants. When the sensor indicates that there are no further hydrocarbon vapors within the system and the thermometer indicates that no heat is generated by the oxidation of contaminants, then the soil is removed from the decontamination unit 10, by a discharge auger 88, operationally connected to the second treatment hopper 36.

The ozone which remains in the decontamination unit 10 is then exhausted through an activated charcoal/catalytic filter 90 and out through an exhaust port 92. The activated charcoal/catalytic filter 90 is used to substantially eliminate the discharge of ozone into the atmosphere. A preferred system is manufactured by PCI Ozone and Control Systems, Inc.,

The exhaust port 92 is normally sealed by a weighted damper (not shown). However, should there be a sudden increase in the pressure inside the decontamination unit, because of an undetected "hot spot" of contamination, the increased pressure will be vented through the activated charcoal/catalytic filter 90, before being released into the atmosphere.

In some embodiments, the decontamination unit is mounted on a suitable means of transport, such as a flat bed trailer. Such embodiments facilitate movement to and operation at sites where contaminated material is to be treated.

The method in accordance with the invention can be carried out at any suitable temperature. For example, it is possible to excavate contaminated soil at a given site until the soil is frozen (0 °C), so that the soil added to the entry hopper will have a temperature of only about 0 °C.

To begin treatment, the solid material to be treated is loaded into the entry hopper 12. The ozone generator 56, the chilled water system 74, and the air pump 26 are activated. The boiler assembly 57 can be activated depending on the vapor point of the contaminant.

While the first soil auger 16 pushes a portion of contaminated material through the backdraft damper 18, misting of the hydrogen peroxide is initiated.

The second soil auger 34 is then activated and introduction of ozone into one of the air supply ducts 54 is begun. The supply fan 50 is turned on to circulate ozone-rich air through the decontamination unit 10. Monitoring of the hydrocarbon vapor content in the first treatment hopper 20 and of the temperature and ozone content in the air return line 72 is begun. In addition, the activated charcoal water condensate filter in the condensation tank 86 is monitored to check for any contaminants that may be condensed and collected with the water and reaction by-products.

When the monitoring of the temperature indicates that no additional heat is being generated, i.e. when the contaminants have been completely oxidized, the discharge auger 88 is automatically activated to discharge the treated material.

The following examples are included to further illustrate the invention. They are not limitations thereon.

### EXAMPLES

In the following series of examples, four different solid materials (wet and dry activated charcoal, sand and dirt) were tested. These samples are representative of the range of material having different porosities, chemical retention characteristics and toxic remediation applications for which the present invention is suited.

The samples were placed on a glass frit which divided a 2000 ml pyrex glass reaction kettle. The kettle had three screw cap ports, two above the glass frit and one below.

Ozone was delivered through the port below the frit and percolated through the samples. The ozone was produced by the corona discharge method in a Model #GL-1 generator obtained from PCI Ozone and Control Company, West Caldwell, New Jersey.

Hydrogen peroxide, having a concentration of 35%, was supplied through the two ports located above the frit. The hydrogen peroxide was sprayed through a fitted stopper by means of a hand-held atomizer which delivered 1/2 ml hydrogen peroxide per injection. One-half milliliter of peroxide was delivered at each of four two-minute intervals. After each test, the samples were decanted through one of the ports above the frit.

The air flow and ozone concentrations were chosen so as to control the reaction rate. The reaction kettle was turned by hand to agitate the media and simulate the folding and turning action of an auger. The test were conducted outdoors, in order to utilize sunlight as a source of UV light.

The top of the kettle contained an additional four ports. Three of these ports (24/40) were sealed, while a fourth center port (34/45) was stoppered and provided with an 11 mm glass tube to vent off-gases. The off-gases were filtered through two 2-liter Erlenmeyer flasks filled with activated charcoal. No evidence of solvents or pesticides was found in testing the charcoal from these filters.

### EXAMPLE 1

Samples of 100 grams each of dry activated charcoal, activated charcoal wetted with 100 ml distilled water, silica sand and soil were admixed with 20 ml of gasoline having a density of 0.7028 g/ml. Each sample was treated with 2. ml of hydrogen peroxide. The silica sand was treated with 3.94 g ozone, while the soil sample was treated with 4.91 g and the dry charcoal and wetted charcoal samples were treated with 5.91 g and 6.80 g ozone respectively. 5.33 SCF of air was supplied to each sample. After treatment over a 10 minute residence time, the media samples were evaluated pursuant to EPA Protocols 8015 and 8020. The results are reported in Table 1, where K symbolizes thousand, P.P.M. symbolizes parts per million, and P.P.B. symbolizes parts per billion. N/D stands for not detectable and SCF stands for standard cubic feet.

**TABLE 1**

| 100G Activated Charcoal | | EPA 8015 | |
|---|---|---|---|
| H₂O₂ | 2ML | 61.0 K P.P.M. | |
| O₃ | 5.91G | EPA 8020 | |
| | | Benzene 650.0 P.P.M. | |
| Air | 5.33 SCF | Toluene 4.4K P.P.M. | |
| | | Ethylbenzene 920.0 P.P.M. | |
| | | Xylenes 5.1K P.P.M. | |

| 100G Silica Sand | | EPA 8015 | |
|---|---|---|---|
| H₂O₂ | 2ML | 2.2K P.P.M. | |
| O₃ | 3.94G | EPA 8020 | |
| | | Benzene N/D <5.0 P.P.B. | |
| Air | 5.33 SCF | Toluene 19.0K P.P.B. | |
| | | Ethylbenzene 13.0K P.P.B. | |
| | | Xylenes 120.0K P.P.B. | |

| 100G "Dirt" | | EPA 8015 | |
|---|---|---|---|
| H₂O₂ | 2ML | 3.0K P.P.M. | |
| O₃ | 4.91G | EPA 8020 | |
| | | Benzene | N/D <5.0 P.P.B. |
| Air | 5.33 SCF | Toluene | 14.0K P.P.B. |
| | | Ethylbenzene | 15.0K P.P.B. |
| | | Xylenes | 140.0K P.P.B. |

| Wet 100G Activated Charcoal | | EPA 8015 | |
|---|---|---|---|
| H₂O | 100ML Distilled | 71.0K P.P.M. | |
| | | EPA 8020 | |
| H₂O₂ | 2ML | Benzene | 290.0K P.P.B. |
| | | Toluene | 2,600.0K P.P.B. |
| O₃ | 6.80G | Ethylbenzene | 680.0K P.P.B. |
| | | Xylenes | 3,800.0K P.P.B. |

### EXAMPLE 2

Four 100 mg samples as described in Example 1 were admixed with 20 ml trichloroethylene having a density of 1.4649 g/ml. The samples were treated with 2 ml hydrogen peroxide. The silica sand and soil samples received 2.46 g ozone; the dry activated charcoal sample was treated with 5.91 g ozone, while the wet sample received 6.69 g ozone. 5.33 SCF air was supplied for the activated charcoal samples and 3.33 SCF air was supplied for the remaining samples. After treatment over a 10 minute residence time, the samples were evaluated pursuant to EPA Protocol 8010. The results are reported in Table 2.

**TABLE 2**

| 100G Activated Charcoal | | EPA 8010 |
|---|---|---|
| H₂O₂ | 2ML | 23.0K P.P.M. |
| O₃ | 5.91G | |
| Air | 5.33 SCF | |

| 100G Silica Sand | | EPA 8010 |
|---|---|---|
| H₂O₂ | 2ML | 8.0K P.P.M. |
| O₃ | 2.46G | |
| Air | 3.33 SCF | |

| 100G Dirt | | EPA 8010 |
|---|---|---|
| H₂O₂ | 2ML | 9.2K P.P.M. |
| O₃ | 2.46G | |
| Air | 3.33 SCF | |

| Wet 100G Activated Charcoal | | EPA 8010 |
|---|---|---|
| H₂O | 100ML Distilled | 57.0K P.P.M. |
| H₂O₂ | 2ML | |
| O₃ | 6.69G | |
| Air | 5.33 SCF | |

### EXAMPLE 3

Samples of 100 grams each of dry activated charcoal, activated charcoal wetted with 100ml distilled water, silica sand and soil were admixed with 20 ml of methanol having a density of 0.7914 g/ml. Each sample was treated with 2 ml of hydrogen peroxide. The silica sand was treated with 3.94 g ozone, while the soil sample was treated with 4.91 g ozone and the charcoal and wetted charcoal samples were treated with 5.91 g and 6.80 g ozone respectively. 5.33 SCF of air was supplied to each sample. After treatment over a 10 minute residence time, the media samples were evaluated pursuant to EPA Protocol 8015 modified for methanol. The results are reported in Table 3.

**TABLE 3**

| 100G Activated Charcoal | | EPA 8015 Modified for Methanol |
|---|---|---|
| H₂O₂ | 2ML | 1.7K P.P.M. |
| O₃ | 5.91G | |
| Air | 5.33 SCF | |

| 100G Silica Sand | | EPA 8015 Modified for Methanol |
|---|---|---|
| H₂O₂ | 2ML | Non Detectable |
| O₃ | 3.94G | <1 P.P.M. |
| Air | 5.33 SCF | |

| 100G "Dirt" | | EPA 8015 Modified for Methanol |
|---|---|---|
| H₂O₂ | 2ML | Non Detectable |
| O₃ | 4.91G | <1 P.P.M. |
| Air | 5.33 SCF | |

| Wet 100G Activated Charcoal | | EPA 8015 Modified for Methanol |
|---|---|---|
| H₂O | 100 ML | 19.6K P.P.M. |
| H₂O₂ | 2ML | |
| O₃ | 6.80G | |
| Air | 5.33 SCF | |

### EXAMPLE 4

To demonstrate the efficacy of the inventive method in treatment of pesticide-contaminated media, 50 g samples of activated charcoal and silica sand were admixed with 1 g 4,4'-DDT (in 10 ml methylene chloride). The samples were then allowed to evaporate for one hour at 75°F. Treatment comprised 2 ml hydrogen peroxide and 2.46 g ozone; air supply was 3.33 SCF. Following a ten minute residence, the samples were evaluated using EPA Protocol 8080. The results are reported in Table 4.

**TABLE 4**

| 50G Activated Charcoal | | EPA 8080 |
|---|---|---|
| H₂O₂ | 2ML | 44'DDE 1.6K P.P.M. |
| O₃ | 2.46G | 44'DDT 13.5K P.P.M. |
| Air | 3.33 SCF | |

| 50G Silica Sand | | EPA 8080 |
|---|---|---|
| H₂O₂ | 2ML | 44'DDE N/D <70.0 P. P.M. |
| O₃ | 2.46G | 44'DDT 8.8 K P.P.M. |
| Air | 3.33 SCF | |

### EXAMPLE 5

Following the procedure described in Example 3, samples were prepared with 1 g Heptachlor in place of the 4,4'-DDT and treated as described in Example 3. After 10 minutes residence time, the samples were evaluated using EPA Protocol 8080. The results are reported in Table 5.

**TABLE 5**

| 50G Activated Charcoal | | EPA 8080 |
|---|---|---|
| H₂O₂ | 2ML | 9.6K P.P.M. |
| O₃ | 2.46G | |
| Air | 3.33 SCF | |

| 50G Silica Sand | | EPA 8080 |
|---|---|---|
| H₂O₂ | 2ML | 5.6K P.P.M. |
| O₃ | 2.46 | |
| Air | 3.33 SCF | |

## Claims

1. A method for treating solid, particulate material including contaminants comprising organic substances, characterised by placing contaminated material in a first treatment hopper (20), evaporating at least a portion of the contaminants, contacting the evaporated contaminants with a first gas phase comprising hydroxyl radicals, in an amount and for a time sufficient to initiate oxidation of the contaminants, transferring the thus partially treated contaminants to a second treatment hopper (36), further contacting evaporated contaminants with a second gas phase comprising hydroxyl radicals, in an amount and for a time sufficient to maintain the oxidation, and cycling the resulting solid particulate material including contaminants between the first and second treatment hoppers (20,36), each time treating with gas phase hydroxyl radicals in an amount effective to maintain the oxidation of evaporated contaminants, until a substantial quantity of the organic contaminants have been removed.

2. A method according to claim 1 wherein the contaminants are organic contaminants.

3. A method according to claim 1 or 2 wherein the hydroxyl radicals in each gas phase are produced from hydrogen peroxide.

4. A method according to claim 3, wherein the amount of hydrogen peroxide is from about 8.0:1 to about 1:1, based on the weight of the contaminated material and the hydrogen peroxide, respectively.

5. A method according to claim 3 or 5 wherein the amount of hydrogen peroxide is from about 5.0:1 to about 2.2:1 based on the weight of the contaminated material and the hydrogen peroxide, respectively.

6. A method according to any preceding claim wherein the hydroxyl radicals in each gas phase are produced from hydrogen peroxide in the presence of up to 3% ozone based on the composition of each gas phase.

7. A method according to any preceding claim wherein the gas phase hydroxyl radicals are produced from hydrogen peroxide in the presence of ozone and UV light.

8. A method according to claim 1 or 2 wherein the hydroxyl radicals in each gas phase are produced from ozone.

9. A method according to any preceding claim wherein the particulate material is soil, sand or activated charcoal.

10. A method according to any preceding claim wherein the organic contaminant is a hydrocarbon containing from one to eighteen carbon atoms, a hydroxyl containing derivative of a hydrocarbon containing from one to eighteen carbon atoms, a halogen containing derivative of a hydrocarbon containing from one to eighteen carbon atoms.

11. A method according to any preceding claim wherein the organic contaminant is a pesticide.

12. A method according to any preceding claim in which the evaporated contaminants are contacted with the gas phase at a temperature up to 200°C.

13. Apparatus for treating solid, particulate materials comprising contaminants including organic substances, characterised by comprising a first transfer means (16) for introducing contaminated material into a first treatment hopper (20) through a first hopper entry port (30), the first treatment hopper (20) having a top and bottom, a first means for evaporating at least a portion of the contaminants, and contacting the evaporated contaminants in the first treatment hopper (20) with a gas phase comprising hydroxyl radicals in an amount effective to oxidise a substantial quantity of the evaporated contaminants, second transfer means (34) for moving treated material from the first treatment hopper (20) through a first treatment hopper exit port then through a second treatment hopper entry port (44) into a second treatment hopper (36), a second means for contacting evaporated contaminants in the second treatment hopper with a gas phase comprising hydroxyl radicals in an amount effective to maintain the oxidation, a third transfer means (48) for moving treated material from the second treatment hopper through a second treatment hopper exit port (46) then through a first treatment hopper return port back to the first treatment hopper (20).

14. Apparatus according to claim 13 wherein the contaminants are organic contaminants.

15. Apparatus according to claim 12 or 13 further comprising means for producing hydroxyl radicals in the gas phase including a tank (24) for storing hydrogen peroxide connected by hydrogen peroxide supply lines (32, 40) to spray nozzles (28, 42) located above the first and second hopper entry ports, and means (26) for regulating the pressure through the spray nozzles.

16. Apparatus according to claim 13, 14 or 15 wherein the second and third transfer means (34, 48) are covered soil augers.

17. Apparatus according to claim 16 further comprising means for heating said covered soil augers.

18. Apparatus according to any of claims 13 to 17 further comprising means (56) for introducing ozone into the gas phase used to contact contaminated material in the first and second treatment hoppers (20, 36).

19. Apparatus according to any of claims 13 to 18 wherein the first and second treatment hoppers (20, 36) each have at least one UV light port (22, 38) to permit UV light to enter the first and second treatment hoppers.

## Patentansprüche

1. Verfahren zur Behandlung von aus Partikeln bestehenden festem Material, das Giftstoffe enthält, die organische Substanzen umfassen, gekennzeichnet durch folgende Verfahrensschritte:
Einbringen von verseuchtem Material in einen ersten Behandlungstrichter (20); Verdampfen zumindest eines Teils der Giftstoffe; Inberührungbringen der verdampften Giftstoffe mit einer ersten Gasphase, die Hydroxylradikale aufweist, und zwar in einer Menge und für eine Zeitdauer, die ausreichen, um eine Oxidation der Giftstoffe einzuleiten; Überführen der so teilweise behandelten Giftstoffe zu einem zweiten Behandlungstrichter (36); weiteres Inberührungbringen verdampfter Giftstoffe mit einer zweiten Gasphase, die Hydroxylradikale aufweist, und zwar in einer Menge und für eine Zeitdauer, die ausreichen, um die Oxidation aufrechtzuerhalten; und Inumlaufbringen des resultierenden festen Partikelmaterials, einschließlich Giftstoffe, zwischen dem ersten und zweiten Behandlungstrichter (20, 36), wobei jedesmal mit Gasphasen-Hadroxylradikalen in einer Menge behandelt wird, die effektiv ist, um die Oxidation von verdampfen Giftstoffen aufrechtzuerhalten, bis eine wesentliche Menge der organischen Giftstoffe beseitigt worden ist.

2. Verfahren nach Anspruch 1, bei dem die Giftstoffe organische Giftstoffe sind.

3. Verfahren nach Anspruch 1 oder 2, bei dem die Hydroxylradikale in jeder Gasphase aus Wasserstoffperoxid erzeugt werden.

4. Verfahren nach Anspruch 3, bei dem die Menge von Wasserstoffperoxid von etwa 8,0 : 1 bis etwa 1 : 1 beträgt, und zwar jeweils auf der Basis des Gewichtes des verseuchten Materials und des Wasserstoffperoxids.

5. Verfahren nach Anspruch 3 oder 4, bei dem die Menge von Wasserstoffperoxid von etwa 5,0 : 1 bis etwa 2,2 : 1 beträgt, und zwar jeweils auf der Basis des Gewichtes des verseuchten Materials und des Wasserstoffperoxids.

6. Verfahren nach einem der vorangehenden Ansprüche, bei dem die Hydroxylradikale in jeder Gasphase aus Wasserstoffperoxid in Anwesenheit von bis zu 3 % Ozon auf der Basis der Zusammensetzung jeder Gasphase erzeugt werden.

7. Verfahren nach einem der vorangehenden Ansprüche, bei dem die Gasphasen-Hydroxylradikale aus Wasserstoffperoxid in Anwesenheit von Ozon und UV-Licht erzeugt werden.

8. Verfahren nach Anspruch 1 oder 2, bei dem die Hydroxylradikale in jeder Gasphase aus Ozon erzeugt werden.

9. Verfahren nach einem der vorangehenden Ansprüche, bei dem das Partikel-Material Erde, Sand oder aktivierte Holzkohle ist.

10. Verfahren nach einem der vorangehenden Ansprüche, bei dem der organische Giftstoff ein Kohlenwasserstoff, der von eins bis achtzehn Kohlenstoffatome enthält, ein Hydroxyl, das ein Derivat eines Kohlenwasserstoffs enthält, welches von eins bis achtzehn Kohlenstoffatome enthält, ein Halogen, das ein Derivat eines Kohlenwasserstoffs enthält, welches von eins bis Achtzehn Kohlenstoffatome enthält, ist.

11. Verfahren nach einem der vorangehenden Ansprüche, bei dem der organische Giftstoff ein Pestizid ist.

12. Verfahren nach einem der vorangehenden Ansprüche, bei dem die verdampften Giftstoffe mit der Gasphase bei einer Temperatur von bis zu 200°C in Kontakt gebracht werden.

13. Vorrichtung zur Behandlung fester, aus Partikeln bestehender Materialien aus Giftstoffen, die organische Substanzen einschließen, gekennzeichnet durch eine erste Fördereinrichtung (16) zum Einbringen verseuchten Materials in einen ersten Behandlungstrichter (20) über eine erste Trichter-Eintrittsöffnung (30), wobei der erste Behandlungstrichter (20) ein Oberteil und ein Unterteil, eine erste Einrichtung zum Verdampfen zumindest eines Teils der Giftstoffe und zum Inberührungbringen der verdampften Giftstoffe in den ersten Behandlungstrichter (20) mit einer Gasphase, die Hydroxylradikale in einer Menge aufweist, die effektiv ist, um eine wesentliche Menge der verdampften Giftstoffe zu oxidieren, aufweist; durch eine zweite Fördereinrichtung (34) zum Bewegen des behandelten Materials vom ersten Behandlungstrichter (20) über eine Austrittsöffnung des ersten Behandlungstrichters, dann über eine Eintrittsöffnung (44) eines zweiten Behandlungstrichters in diesen zweiten Behandlungstrichter (36); durch eine zweite Einrichtung zum Inkontaktbringen der verdampften Giftstoffe im zweiten Behandlungstrichter mit einer Gasphase, die Hydroxylradikale in einer Menge aufweist, die effektiv ist, um die Oxidation aufrechtzuerhalten; durch eine dritte Fördereinrichtung (48) zum Bewegen des behandelten Materials vom zweiten Behandlungstrichter über eine zweite Austrittsöffnung (46), dann über eine Rückführöffnung des ersten Behandlungstrichters zum ersten Behandlungstrichter (20).

14. Vorrichtung nach Anspruch 13, bei der die Giftstoffe organische Giftstoffe sind.

15. Vorrichtung nach Anspruch 13 oder 14, gekennzeichnet durch eine Einrichtung zur Erzeugung von Hydroxylradikalen in der Gasphase, mit einem Tank (24) zum Speichern von Wasserstoffperoxid, der durch Wasserstoffperoxidzuführleitungen (32, 40) mit Sprühdüsen (28, 42) verbunden ist, die oberhalb der Eintrittsöffnungen des ersten und zweiten Trichters angeordnet sind; sowie durch eine Einrichtung zur Regelung des Drucks an den Sprühdüsen.

16. Vorrichtung nach Anspruch 13, 14 oder 15, bei der die zweite und dritte Fördereinrichtung (34, 48) bedeckte Erd-Schneckengänge sind.

17. Vorrichtung nach Anspruch 16 mit einer Einrichtung zum Erwärmen der bedeckten Erd-Schneckengänge.

18. Vorrichtung nach einem der Ansprüche 13 bis 17 mit einer Einrichtung zum Einbringen von Ozon in die Gasphase, das dazu verwendet wird, um das verseuchte Material im ersten und zweiten Behandlungstrichter (20, 36) zu kontaktieren.

19. Vorrichtung nach einem der Ansprüche 13 bis 18, bei der der erste und zweite Behandlungstrichter (20, 36) je mindestens eine UV-Lichtöffnung (22, 38) aufweisen, damit UV-Licht in den ersten und zweiten Behandlungstrichter gelangen kann.

## Revendications

1. Procédé pour le traitement de matières solides, particulaires, y compris de contaminants comprenant des substances organiques, caractérisé par les étapes consistant à mettre en place des matières contaminées dans une première trémie de traitement (20), à faire évaporer au moins une partie des contaminants, à mettre en contact les contaminants évaporés avec une première phase gazeuse comprenant des radicaux hydroxyle, dans une quantité et pendant une durée suffisante pour amorcer l'oxydation des contaminants, à transférer les contaminants ainsi partiellement traités dans une seconde trémie de traitement (36), à mettre de plus en contact les contaminants évaporés avec une seconde phase de gaz comprenant des radicaux hydroxyle, dans une quantité et pendant une durée suffisante pour maintenir l'oxydation et recycler les matières particulaires solides obtenues y compris les contaminants entre les première et seconde trémies de traitement (20, 36), en traitant chaque fois avec des radicaux hydroxyle de phase gazeuse dans une quantité efficace pour maintenir l'oxydation des contaminants évaporés jusqu'à la séparation d'une quantité importante de contaminants organiques.

2. Procédé selon la revendication 1, dans lequel les contaminants sont des contaminants organiques.

3. Procédé selon la revendication 1 ou 2, dans lequel les radicaux hydroxyle dans chaque phase gazeuse sont produits à partir du peroxyde d'hydrogène.

4. Procédé selon la revendication 3, dans lequel la quantité de peroxyde d'hydrogène est de 8,0:1 jusqu'à environ 1:1, rapporté au poids des matières contaminées et au peroxyde d'hydrogène, respectivement.

5. Procédé selon la revendication 3 ou 5, dans lequel la quantité de peroxyde d'hydrogène est d'environ 5,0:1 jusqu'à environ 2,2:1 rapporté respectivement au poids des matières contaminées et du peroxyde d'hydrogène.

6. Procédé selon l'une quelconque des revendications précédentes, dans lequel les radicaux hydroxyle dans chaque phase gazeuse sont produits à partir du peroxyde d'hydrogène en présence jusqu'à 3 % d'ozone rapportés à la composition de chaque phase gazeuse.

7. Procédé selon l'une quelconque des revendications précédentes, dans lequel les radicaux hydroxyle de phase gazeuse sont produits à partir du peroxyde d'hydrogène en présence d'ozone et de lumière UV.

8. Procédé selon la revendication 1 ou 2, dans lequel les radicaux hydroxyle dans chaque phase gazeuse sont produits à partir d'ozone.

9. Procédé selon l'une quelconque des revendications précédentes, dans lequel les matières particulaires sont de la terre, du sable ou du charbon actif.

10. Procédé selon l'une quelconque des revendications précédentes, dans lequel le contaminant organique est un hydrocarbure contenant de 1 à 18 atomes de carbone, un dérivé contenant de l'hydroxyle d'un hydrocarbure contenant de 1 à 18 atomes de carbone, un dérivé contenant un halogène d'un hydrocarbure avec 1 à 18 atomes de carbone.

11. Procédé selon l'une quelconque des revendications précédentes, dans lequel le contaminant organique est un pesticide.

12. Procédé selon l'une quelconque des revendications précédentes, dans lequel les contaminants évaporés sont mis en contact avec la phase gazeuse à une température jusqu'à 200°C.

13. Appareil pour le traitement de matières particulaires solides comprenant les contaminants, y compris les substances organiques, caractérisé par le fait d'incorporer un premier moyen de transfert (16) pour l'introduction de matières contaminées dans une première trémie de traitement (20) à travers un orifice d'entrée de première trémie (30), la première trémie de traitement (20) comportant un dessus et un fond, un premier moyen pour l'évaporation d'au moins une partie des contaminants et la mise en contact des contaminants évaporés dans la première trémie de traitement (20) avec une phase gazeuse comprenant des radicaux hydroxyle dans une quantité efficace pour oxyder une quantité importante des contaminants évaporés, un second moyen de transfert (34) pour déplacer les matières traitées à partir de la première trémie de traitement (20) à travers un premier orifice de sortie de trémie de traitement puis à travers un second orifice d'entrée de trémie de traitement (44) jusque dans une seconde trémie de traitement (36), un second moyen pour la mise en contact de contaminants évaporés dans la seconde trémie de traitement avec une phase gazeuse comprenant des radicaux hydroxyle dans une quantité suffisante pour maintenir l'oxydation, un troisième moyen de transfert (48) pour déplacer les matières traitées depuis la seconde trémie de traitement à travers un second orifice de sortie de trémie de traitement (46) puis à travers un orifice de retour de première trémie de traitement jusqu'à la première trémie de traitement (20).

14. Appareil selon la revendication 13, dans lequel les contaminants sont des contaminants organiques.

15. Appareil selon la revendication 12 ou 13, comprenant de plus des moyens pour produire des radicaux hydroxyle dans la phase gazeuse y compris un réservoir (24) pour stocker le peroxyde d'hydrogène raccordé par des conduites d'alimentation de peroxyde d'hydrogène (32, 40) à des tuyères de pulvérisation (28, 42) situées au-dessus des premier et second orifices et un moyen (26) pour réguler la pression à travers les tuyères de pulvérisation.

16. Appareil selon la revendication 13, 14 ou 15, dans lequel les second et troisième moyens de transfert (34, 48) sont des convoyeurs à vis couverts pour acheminer de la terre.

17. Appareil selon la revendication 16, comprenant de plus des moyens pour chauffer les convoyeurs à vis couverts pour acheminer de la terre.

18. Appareil selon l'une quelconque des revendications 13 à 17, comprenant de plus des moyens (56) pour introduire de l'ozone dans la phase gazeuse utilisée pour mettre en contact les matières contaminées dans les première et seconde trémie de traitement (20, 36).

19. Appareil selon l'une quelconque des revendications 13 à 18, dans lequel les première et seconde trémies de traitement (20, 36) comportent chacune au moins un orifice de lumière UV (22, 38) pour permettre à la lumière UV de pénétrer dans les première et seconde trémies de traitement.
